# EUROPÄISCHE PATENTSCHRIFT

(11) **EP 0 518 209 B1**
(45) Veröffentlichungstag und Bekanntmachung des Hinweises auf die Patenterteilung: **18.10.1995**
(21) Anmeldenummer: 92109424.9
(22) Anmeldetag: 04.06.1992
(51) Int. Cl.: A23N 15/08

(54) **Anlage zum Entfernen von Teilen einer kompaktförmigen Frucht**
Device to remove parts of a fruit
Dispositif d'enlèvement des pièces d'un fruit

(30) Priorität: 06.06.1991 DE 4118604
(43) Veröffentlichungstag der Anmeldung: 16.12.1992
(73) Patentinhaber: Popma, Frans, D-60437 Frankfurt (DE); Zura, Franz, D-60598 Frankfurt (DE)
(72) Erfinder: Popma, Frans, D-60437 Frankfurt (DE); Zura, Franz, D-60598 Frankfurt (DE)
(74) Vertreter: Boecker, Joachim, Dr.-Ing.

(56) Entgegenhaltungen:
- EP-A- 0 275 133
- EP-A- 0 327 146
- DE-A- 3 903 130
- DE-A- 3 920 114
- FR-A- 2 290 164
- GB-A- 2 189 381
- US-A- 3 646 978

## Beschreibung

Die Erfindung betrifft eine Anlage zum Entfernen von Teilen einer kompaktförmigen Frucht gemäß dem Oberbegriff des Anspruches 1. Der Begriff "Frucht" wird hierbei nicht im streng biologischem Sinne verwendet. Vielmehr werden hierunter von Menschen geerntete Pflanzenteile verstanden, wie Früchte im engeren Sinne, zum Beispiel Äpfel, Hackfrüchte, zum Beispiel Rüben, Knollen, zum Beispiel Kartoffeln, oder Zwiebeln, zum Beispiel Blumenzwiebel.

Beispielsweise im landwirtschaftlichen Bereich müssen häufig kompaktförmige Früche, bei denen in einem begrenzten Bereich Teile angewachsen sind, von diesen Teilen (Abrißgut) befreit werden. Beispiele hierfür sind die an Blumenzwiebeln, insbesondere Tulpenzwiebeln, angewachsenen Wurzelhaare, das an Rüben angewachsene Kraut oder der an Birnen oder Äpfeln angewachsene Stiel. Solche Arbeiten wurden bisher überwiegend von Hand ausgeführt, wodurch hohe Lohnkosten entstehen.

Aus der DE-OS 39 03 130 und der DE-OS 39 20 114 ist bereits eine Anlage zur maschinellen Entfernung der Wurzelhaare an Blumenzwiebeln entsprechend dem Oberbegriff von Anspruch 1 bekannt. Bei dieser Anlage werden die mittels einer Fördervorrichtung angelieferten Blumenzwiebeln über einen Elevator einzeln in einen Luftstrom gefördert, der durch ein unterhalb der Blumenzwiebel angeordnetes Blasrohr und ein oberhalb der Blumenzwiebel angeordnetes Saugrohr erzeugt wird. In diesem Luftstrom orientiert sich die Blumenzwiebel nach dem Fallschirmprinzip mit ihren Wurzelhaaren nach oben und wird durch den Luftstrom in Richtung gegen einen Begrenzungskäfig am Eingang des Saugrohres gehoben, wobei die Haare in das Saugrohr hineinragen. Die Blumenzwiebel wird dann durch einen Schieber seitlich bewegt, wobei die Wurzelhaare zwischen zwei umlaufende, gegeneinander anliegende Klemmbänder gelangen und von diesen festgehalten und weitertransportiert werden. Dabei gelangt die Blumenzwiebel zwischen zwei parallele mit Abstand voneinander angeordnete endlose Bänder, die mit einer Relativgeschwindigkeit zueinander umlaufen. Die Blumenzwiebel wird von diesen Bändern festhalten und gedreht, wobei sie von dem in den anderen Klemmbänderpaar festgeklemmten Wurzelhaaren abgeschert wird.

Diese Anordnung arbeitet in verschiedener Hinsicht nicht zufriedenstellend: Die Übergabe der angesaugten Blumenzwiebel an die separate Klemmvorrichtung für die Wurzelhaare arbeitet unzuverlässig, da die Blumenzwiebel den Luftstrom bereits teilweise verläßt, bevor die Haare von der Klemmvorrichtung sicher ergriffen werden. Ein weiterer Nachteil besteht in der unregelmäßigen Zuführung der Blumenzwiebel zum Elevator. Es kann vorkommen, daß zwei Blumenzwiebeln gleichzeitig auf eine Elevatorplatte gelangen. Außerdem ist die Verarbeitungsgeschwindigkeit gering. Eine Steigerung der Verarbeitunsskapazität erfordert die Parallelschaltung von zwei oder mehreren praktisch vollständigen Anordnungen mit Fördervorrichtung, pneumatischer Greifvorrichtung, Klemmvorrichtung und Abschervorrichtung. Die Anlage wird dadurch sehr kostspielig und raumaufwendig.

Der Erfindung liegt die Aufgabe zugrunde, eine Anlage der eingangs genannten Art zu entwickeln, welche ein sicheres Greifen des Abrißgutes der Frucht durch die pneumatische Anordnung sowie ein sauberes und die Frucht schonendes Abreißen des Abrißgutes gewährleistet, wobei die Verarbeitungskapazität der Anordnung mit begrenztem Aufwand sehr groß gemacht werden kann. Ferner soll die Anordnung mit einer Fördervorrichtung für die Zuführung der Früchte versehen werden, die eine geordnete Zuführung der Früchte in einer größeren Anzahl von parallelen Reihen ermöglicht.

Anhand der in den Figuren gezeigten Ausführungsbeispiele soll die Erfindung näher erläutert werden. Es zeigen
- Figur 1: ein Ausführungsbeispiel einer Anlage gemäß der Erfindung im Schnitt längs der Linie B-B in Figur 2,
- Figur 2: eine Draufsicht auf den linken Teil der Anlage in Figur 1,
- Figur 3: eine Seitenansicht der Anlage, gesehen in Richtung des Pfeils A in Figur 1,
- Figur 4: ein Ausführungsbeispiel einer Abschervorrichtung,
- Figur 5: ein Ausführungsbeispiel einer pneumatischen Greifvorrichtung für sechs parallele Verarbeitungsreihen,
- Figur 6: in entsprechender Darstellung wie in Figur 5 den Saugöffnungsteil einer Greifvorrichtung mit sechs parallelen Saugöffnungsrädern, wobei zwischen benachbarten Saugöffnungsrädern eine geringe Winkelversetzung vorhanden ist,
- Figur 7: einen Schnitt längs der Linie C-C in Figur 6,
- Figur 8: ein Ausführungsbeispiel einer Klemmvorrichtung nach der Erfindung in einer ersten Seitenansicht,
- Figur 9: die Klemmvorrichtung gemäß Figur 8 in einer um 90° gedrehten Seitenansicht,
- Figur 10: ein erstes Beispiel eines Musters für die Profilierung der Förderwalzen einer in der Anlage nach der Erfindung verwendeten Fördervorrichtung,
- Figur 11: ein zweites Muster für die Profilierung der genannten Förderwalzen, bei welchem die Positionierungsabstände senkrecht zur Förderrichtung vergrößert sind,
- Figur 12: ein drittes Muster für die Profilierung der genannten Förderwalzen, bei welchem die Positionierungsabstände in Förderrichtung vergrößert sind,
- Figur 13: ein viertes Beispiel eines Musters für die Profilierung der genannten Förderwalzen, bei dem die Positionierungsreihen in Förderrichtung abwechselnd gegeneinander versetzt sind,
- Figur 14: ein fünftes Beispiel eines Musters für die Profilierung der genannten Förderwalzen, bei welchem die Positionierungsabstände in Förderrichtung und senkrecht dazu gegenüber dem kleistmöglichen Abstand vergrößert sind und zugleich eine abwechselnde Versetzung der Positionierungsreihen in Förderrichtung vorhanden ist,
- Figur 15: ein erstes Paar von Walzenabschnitten, aus denen alle Walzen der Fördervorrichtung aufgebaut werden können,
- Figur 16: ein zweites Paar von Walzenabschnitten, aus denen alle Walzen der Fördervorrichtung aufgebaut werden können.

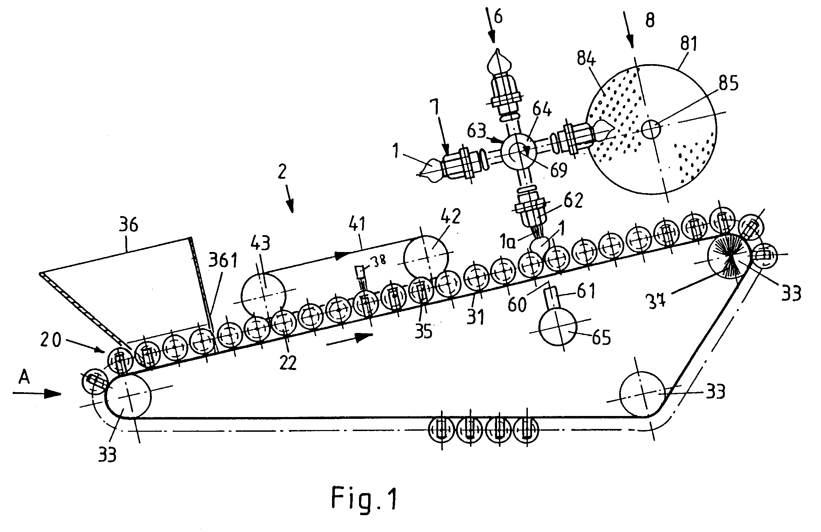

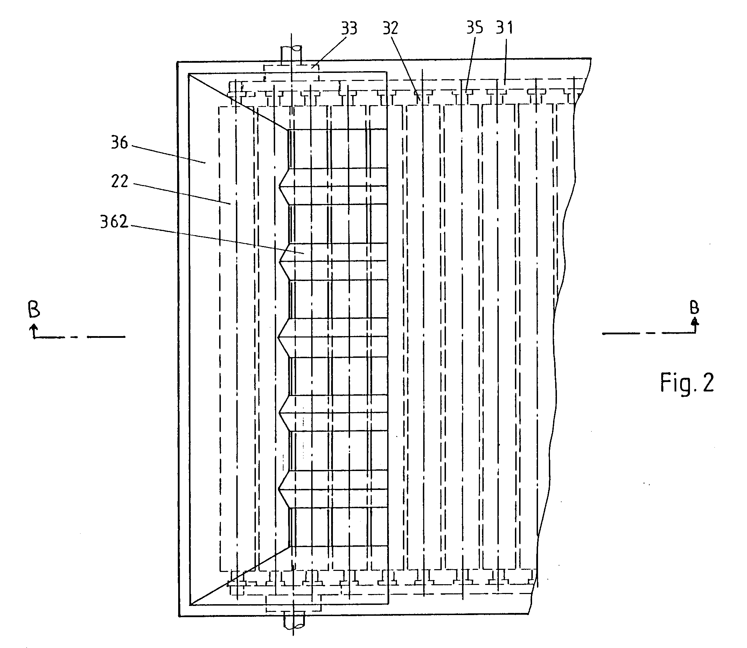

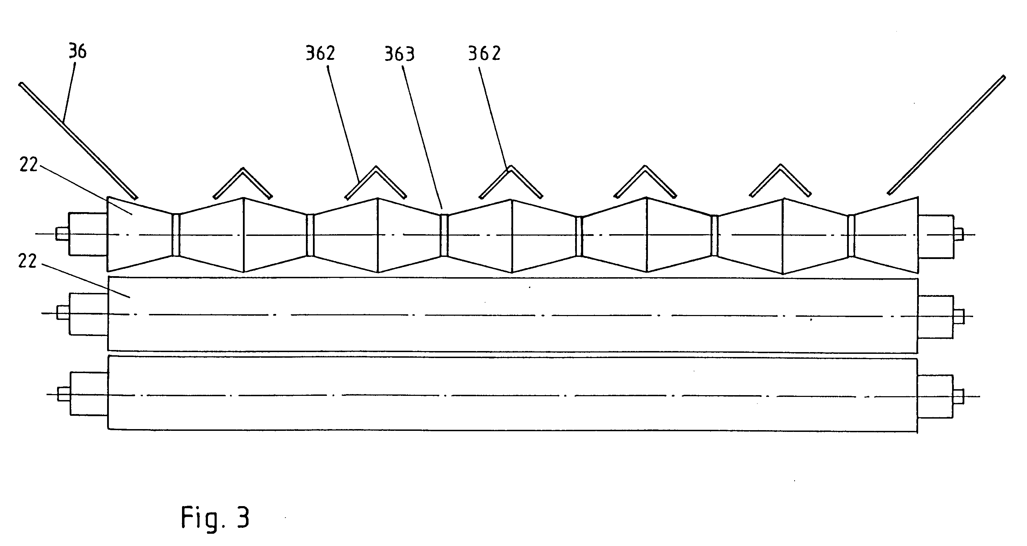

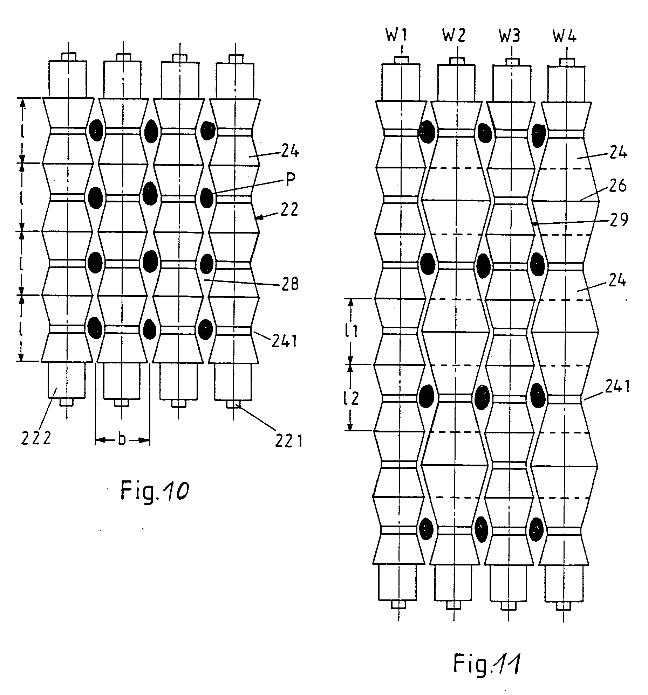

Bei der in den Figuren 1 bis 3 gezeigten Anlage werden die Früchte über eine Fördervorrichtung 2 herangeführt, die aus einem aus Förderwalzen 22 aufgebauten Förderband 20 besteht. Dabei erfolgt die Zuführung der Früchte 1 in diesem Ausführungsbeispiel in sechs in Förderrichtung parallelen Reihen, wobei die Früchte innerhalb einer Reihe einen festen gegenseitigen Abstand haben. Diese geordnete Zuführung wird durch die Besonderheiten der gezeigten Fördervorrichtung ermöglicht, auf die später im einzelnen eingegangen wird. Die Früchte stecken in sogenannten Aufnahmetrichtern 28 (Figur 10) auf dem Förderband 20.

Grundsätzlich ist die Zuführung der Früchte auch mit beliebigen anderen Fördervorrichtungen möglich, wobei lediglich die Bedingung erfüllt sein muß, daß die Zuführung der Früchte längs einer bestimmten Linie in Förderrichtung erfolgt und zu jeweils bestimmten Zeiten jeweils eine Frucht auf dieser Linie angeliefert wird.

Im folgenden wird die am Ende des Förderbandes erfolgende Bearbeitung der Früchte zunächst für eine einzige Zuführreihe (Linie) der Früchte erläutert:
An der Stelle 60 befindet sich unterhalb des Förderbandes ein Blasrohr 61, aus welchem kontinuierlich oder nur zu bestimmten Zeiten Druckluft austritt und von unten gegen die in einem Aufnahmetrichter 28 liegende Frucht 1 bläst. Oberhalb des Förderbandes ist über der Stelle 60 ein Saugöffnungsrad 63 vorhanden, das in dem Ausführungsbeispiel als Saugrohrrad ausgebildet ist, das aus einem zentralen Saugrohrkanal 64 besteht, von dem radial nach außen mehrere gleichmäßig über den Umfang verteilte Saugrohre 62 ausgehen, die pneumatisch und mechanisch mit dem Saugrohrkanal 64 verbunden sind. Das Saugrohrrad 63 dreht sich um seine horizontale Mittelpunktsachse 69, die so positioniert ist, daß die Saugrohre mit ihren freien Enden in geringer Höhe über der Frucht 1 vorbeilaufen. Die Drehachse 69 liegt entweder direkt oder etwas in Förderbandrichtung versetzt über der Mittelpunktsachse des Blasrohres 61. Eine geringe Versetzung in Förderrichtung erweist sich als zweckmäßig, so daß die von unten kommende Druckkraft der Druckluft bereits voll auf die Frucht wirkt, bevor die Saugkraft von oben ihre volle Wirkung entfaltet. Bei diesem Vorgang wird die Frucht zunächst nach dem Fallschirmprinzip mit ihrem leichteren Abrißgut nach oben ausgerichtet und dann gegen die Mündung des Saugrohres 62 gehoben, wobei das Abrißgut 1a in die Öffnung des Saugrohres hineingezogen wird, während die eigentliche Frucht 1 infolge ihrer größeren Abmessungen gegen die Öffnung des Saugrohres anliegt.

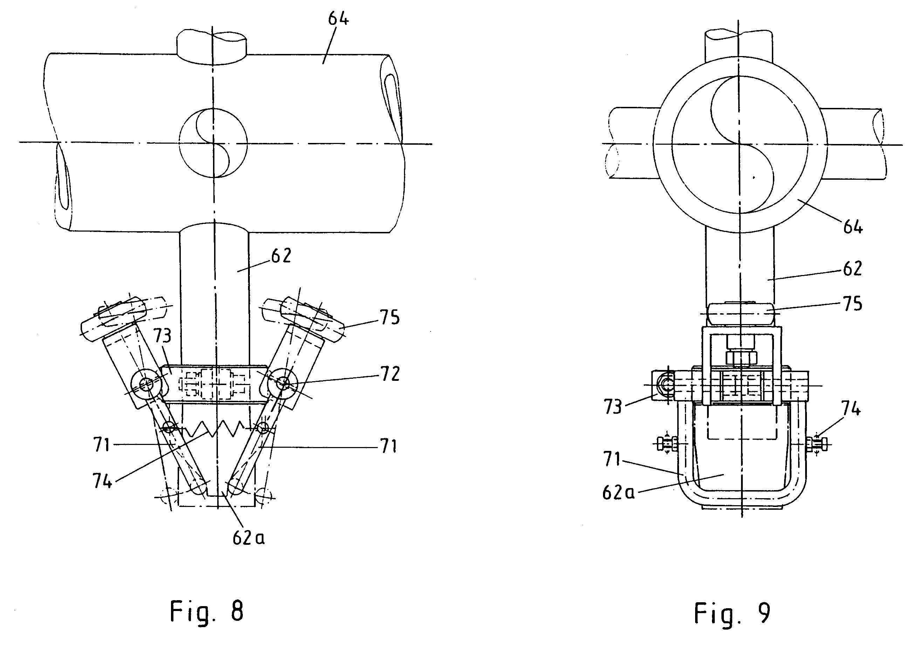

Die Saugrohre sind an ihren freien Enden mit je einer Klemmvorrichtung versehen, mit welcher das Abrißgut am Saugrohr festgeklemmt wird. Diese Klemmvorrichtung kann beispielsweise in der Weise verwirklicht werden, daß die radial äußeren Enden der Saugrohre aus aufgesetzten Stutzen aus weichem, elastisch gut verformbarem Material bestehen, zum Beispiel Gummi oder Kunststoff, welches von zwei am Saugrohr befestigten Bügeln zusammengedrückt wird, so daß das Abrißgut zwischen den aneinanderliegenden Innenwänden dieser Stutzen eingeklemmt wird. Ein Ausführungsbeispiel einer Klemmvorrichtung wird weiter unten anhand der Figuren 8 und 9 beschrieben.

Die Drehgeschwindigkeit des Saugrohrrades 63 ist mit der Geschwindigkeit des Förderbandes über beispielsweise Kettenräder so gekoppelt, daß eine Frucht und ein Saugrohr stets gleichzeitig an der Stelle 60 eintreffen.

Statt aus individuellen Saugrohren 62 kann das Saugöffnungsrad auch die Gestalt einer geschlossenen flachen Trommel haben, an deren äußerer Mantelfläche Saugöffnungen vorgesehen sind. Der gesamte Innenraum der Trommel ist dabei an die Unterdruck erzeugende Saugquelle angeschlossen. Die Klemmvorrichtungen für diese Saugöffnungen können bei dieser Konstruktion innerhalb der geschlossenen Trommel angeordnet sein.

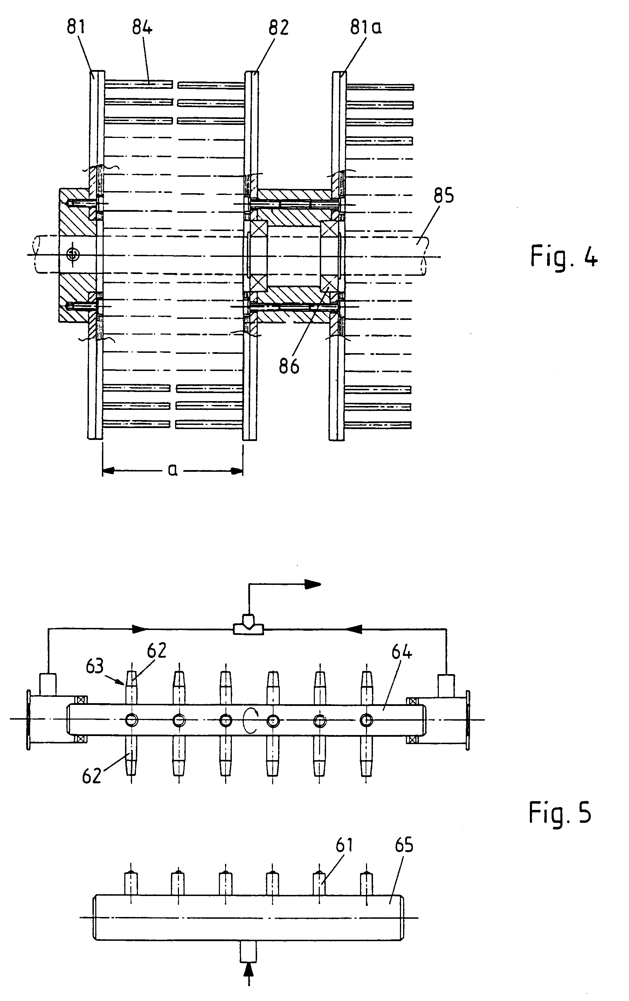

An einer Umfangsstelle des drehbaren Saugrohrrades befindet sich eine stationäre Abschervorrichtung 8 für die Frucht. Ein Ausführungsbeispiel einer solchen Abschervorrichtung zeigt Figur 4, wobei der mit 81a bezeichnete rechte Teil zunächst außer Betracht bleibt. Diese Abschervorrichtung besteht aus zwei auf der gleichen Welle 85 sitzende parallele kreisförmige Scheiben 81, 82, die an den einander zugekehrten Seiten über die gesamte Flächen mit langen Fingern 84 besetzt sind, die aus einem weichen, elastisch stark verformbaren Material, wie zum Beispiel Gummi oder Kunststoff, bestehen. Die freien Enden der Finger der beiden Scheiben berühren sich annähernd oder können sich auch leicht überlappen. Der Abstand a zwischen den beiden Scheiben 81 und 82 ist einstellbar und wird so bemessen, daß zumindest die am Saugrohr 62 festgeklemmte Frucht in den Raum mit den nachgiebigen Fingern zwischen den beiden Scheiben eintauchen kann, wie dies in Figur 1 angedeutet ist. Zweckmäßigerweise ist der Abstand a so bemessen, daß auch das Saugrohr 62 selbst und die an ihm sitzende Klemmvorrichtung in den Raum zwischen den Scheiben eintauchen kann, da dadurch der von der Frucht 1 zwischen den beiden Scheiben zurückgelegte Weg größer wird, so daß sich eine größere Abscherkraft aufbauen kann, wie sich aus den folgenden Ausführungen ergibt.

Die eine Scheibe 81 ist fest, aber verstellbar mit der drehbaren Welle 85 verbunden, während die andere Scheibe 82, zum Beispiel mittels eines Kugellagers 86, frei auf der Welle 85 rotieren kann. Während des Betriebes führen die beiden Scheiben relativ zueinander eine Drehbewegung aus. Das hat zur Folge, daß die zwischen den Fingern 84 eingeklemmte Frucht 1 um eine im wesentlichen mit der Mittellinie des Saugrohres fluchtende Achse gedreht wird, wobei das an der Frucht befindliche Abrißgut abgeschert wird. Die vom Abrißgut befreite Frucht wird dann durch die Drehbewegung und die Schwerkraft aus dem Raum zwischen den Scheiben herausgedreht und fällt entweder zurück auf das Förderband 20 oder auf eine entsprechende Ablenkvorrichtung. Die Relativdrehung zwischen den beiden Scheiben ist so bemessen, daß die Frucht außer ihrer Drehung um die vorgenannte Achse auch der Bewegung des das Abrißgut festhaltenden Saugrohres 62 folgt.

Es ist auch möglich, daß die eine Scheibe 82 feststeht und nur die andere Scheibe 81 rotiert. Vorteilhaft ist jedoch eine gegensinnige Drehung beider Scheiben, weil dann ein größerer Verdrehungswinkel der Frucht relativ zur Klemmvorrichtung erzielt wird.

In dem gezeigten Ausführungsbeispiel ist die Abschervorrichtung auf der ablaufenden Seite des Förderbandes angeordnet, so daß die am Saugrohr festgehaltene Frucht einen Winkel von etwa 270 Grad bis zum Erreichen der Abschervorrichtung durchlaufen muß. Diese Anordnung ist aus räumlichen Gründen vorteilhaft. Die Abschervorrichtung kann aber auch an einer anderen Umfangsstelle des Saugrohrrades 63 angeordnet werden, zum Beispiel an der einlaufenden Seite des Förderbands, wobei der Transportwinkel der Frucht nur etwa 45 Grad beträgt. Ein Zurückfallen der abgescherten Frucht auf das Förderband kann dabei durch ein geeignetes Umlenkblech verhindert werden.

Die Abschervorrichtung kann statt aus zwei Scheiben auch aus zwei im gleichen Abstand a parallel zueinander geführten umlaufenden Bändern bestehen, wobei die beiden Bänder sich nach demselben Relativbewegungsmuster wie die Scheiben bewegen. Die Frucht taucht dabei in gleicher Weise, von der Klemmvorrichtung des Saugrohrrades gehalten und auf einem Kreisbogen sich bewegend, in den Raum zwischen den beiden Bänder ein.

Die soweit beschriebene Anlage ist besonders geeignet, die Anzahl der beschriebenen Vorrichtungen senkrecht zur Förderrichtung des Bandes zu vervielfachen. Dabei können die pneumatischen Greifvorrichtungen und Abschervorrichtungen weitgehend zusammengefaßt werden. Figur 5 zeigt eine gemeinsame Saugvorrichtung für sechs parallele Zuführreihen. Auf dem zentralen Saugkanal 64 sind nebeneinander sechs Saugrohrräder 63 mit der erforderlichen Anzahl von Saugrohren 62, im Beispiel vier, angeordnet, die alle über das gleiche Saugluftsystem versorgt werden. Darunter sind die an einen gemeinsamen stationären Druckluftverteiler 65 angeschlossenen Blasrohre 61 angeordnet.

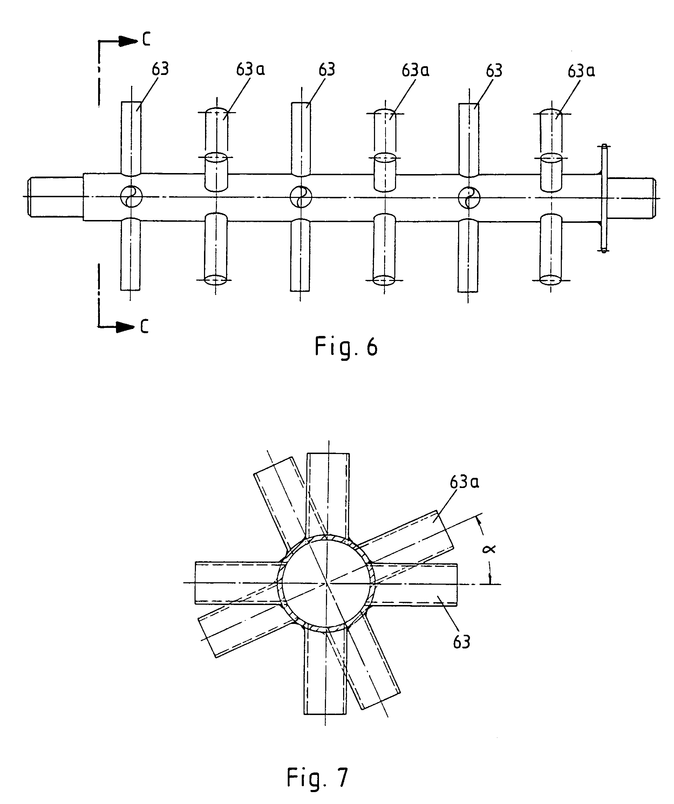

Die Figuren 6 und 7 zeigen den Saugrohrteil einer ähnlichen Anordnung wie Figur 5. Dabei sind jeweils benachbarte Saugrohrräder 63 und 63a um einen geringen Winkel Alpha (im Ausführungsbeispiel etwa 30 Grad) gegeneinander versetzt. Dieser Versetzung entspricht eine entsprechende gegenseitige Versetzung der von der Fördervorrichtung angelieferten Reihen von Früchte. Durch diese Versetzung ist es möglich, die Verarbeitungskapazität bei gegebener Breite der Fördervorrichtung zu erhöhen.

Figur 4 zeigt, wie bei der Verarbeitung von mehreren Reihen angelieferter Früchte die Abschervorrichtungen für die verschiedenen Reihen zusammengebaut werden können. Auf die Welle 85 können jeweils zwei über geeignete Distanzelemente miteinander gekoppelte Fingerscheiben 81a und 82 aufgeschoben werden, die frei auf der Welle 85 drehbar sind. Danach wird auf jeder Seite eine Fingerscheibe der Bauart 81 aufgeschoben, die mit der Welle drehfest verbunden wird. Dann folgen wieder auf beiden Seiten Doppelfingerscheiben der Bauart 81a plus 82. Dies wird fortgesetzt, bis die gewünschte Anzahl von Fingerscheibenpaare zusammengestellt sind.

Die Figuren 8 und 9 zeigen ein Ausführungsbeispiel einer Klemmvorrichtung für das Abrißgut. Eine solche Klemmvorrichtung ist am äußeren Ende jedes Saugrohres 62 vorhanden. Man erkennt in den Figuren 8 und 9 das an den Saugrohrkanal 64 angeschlossene Saugrohr 62. Am vorderen Ende des Saugrohres ist ein elastisch leicht verformbarer Stutzen 62a beispielsweise mit einer nicht dargestellten Schlauchklemme auf dem Saugrohr befestigt. Die Klemmvorrichtung besteht aus zwei steuerbaren Bügeln 71, die über je ein Drehgelenk 72 drehbar an einer aufsetzbaren Rohrschelle 73 am Ende des nicht verformbaren Saugrohres 62 festgeschraubt ist. Die beiden Bügel 71 werden über eine vorgespannte Zugfeder 74 derart mit ihren im Sinne der Zeichnung unteren Enden zueinander gezogen, daß sie die freie Öffnung des verformbaren Stutzens 62 zusammendrücken, so daß im Falle eines in das Saugrohr hineinragenden Abrißgutes dieses fest eingeklemmt wird. Am entgegen gesetzten Ende ist jeder Klemmbügel mit einem drehbaren Steuerrad 75 versehen.

Im Normalzustand ist also der verformbare Stutzen 62a des Saugrohres 62 durch die Klemmvorrichtung zusammengedrückt. Während des Arbeitszyklusses passiert das umlaufende Saugrohrrad 63 an einer bestimmten Umfangstelle zwei nicht dargestellte Leitbleche oder Leitschienen, die so plaziert sind, daß sie die gegen sie laufenden Steuerräder 75 kurzfristig in Richtung zum Saugrohr 62 drücken. Dadurch wird die Saugrohrmündung geöffnet. Das frei werdende Abrißgut wird durch die Saugluft durch das Saugluftsystem fortgetragen. In Figur 1 liegen die genannten Leitbleche an einer Umfangstelle kurz bevor das Saugrohr in der Position 60 anlangt, in der es einen neuen Gegenstand ansaugt.

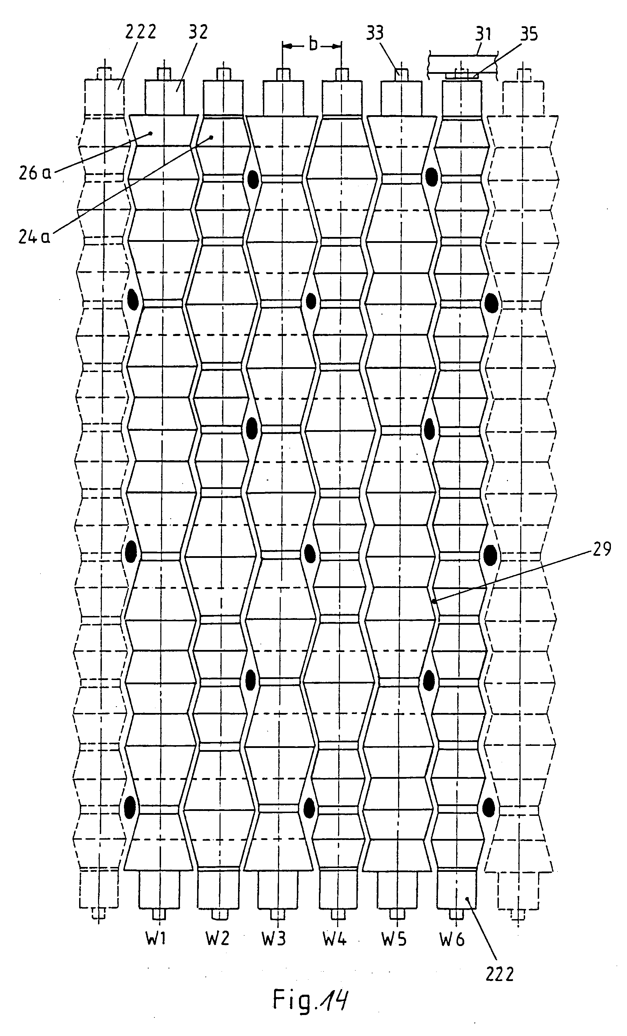

Im Folgenden wird nunmehr eine besondere Ausführungsform der Fördervorrichtung 2 beschrieben, die sich für die Anlage gemäß der Erfindung besonders gut eignet, da sie auf sichere Weise die Zuführung der Früchte in parallelen Reihen, die gegeneinander versetzt sein können, ermöglicht:
Wie die Figuren 1 bis 3 zeigen, gehört zu der Fördervorrichtung ein endloses Förderband 20, welches aus nebeneinanderliegenden Förderwalzen 22 aufgebaut ist. Die Verbindung dieser Förderwalzen erfolgt beispielsweise mittels zweier Kettenräder 31, von denen eines in Figur 1 durch einen dicken Strich angedeutet ist und die über je drei Kettenräder 33 laufen. An den Kettengliedern sind vertikalen Lagerbleche 35 befestigt, in denen die Förderwalzen mit ihren Lagerzapfen 33 (siehe auch Figur 14) frei drehbar gelagert sind. Da bei einer solchen Befestigung der Förderwalzen an den Ketten der Abstand zwischen den Förderwalzen beim Herumlaufen um ein Kettenrad 33 vergrößert wird, befindet sich auf der Kettenradachse unter dem Förderband eine mitdrehende Bürste 37, die ein Durchfallen der Früchte durch das Förderband 20 verhindert.

Das Förderband 20 ist längs seiner Förderstrecke vorzugsweise mit einer Steigung in Förderrichtung versehen, die etwa 10 bis 30 Grad, vorzugsweise 15 bis 20 Grad, gegenüber der Horizontalen beträgt. Durch diese Steigung wirkt auf die auf den Förderwalzen liegenden Früchte eine Schwerkraftkomponente in Gegenförderrichtung. Vorzugsweise ist diese Neigung der Förderstrecke einstellbar durch Drehung des gesamten Gestelles, in dem das Förderband gelagert ist.

Die Früchte werden in einen Einschüttschacht 36 geschüttet, der einen offenen Boden hat, so daß die Früchte auf das Förderband 20 fallen. Durch eine Eintrittsöffnung 361 können die Früchte den Einschüttschacht 36 in Förderrichtung verlassen. Am Boden des Einschüttschachtes können gewölbte oder dachförmig abgewinkelte Leitbleche 362 vorhanden sein, die so angeordnet sind, daß sich am Boden des Einschüttschachtes in Förderrichtung verlaufende Rinnen 363 bilden, die mit den in Förderrichtung verlaufenden Positionierungsreihen fluchten.

In dem der Verteilung der Früchte auf die Positionierungsstellen dienenden Bereich des Förderbandes werden die Förderwalzen in Gegenförderrichtung gedreht, so daß auf die Früchte eine Förderkraft entgegen der Förderrichtung ausgeübt wird. Im gezeigten Ausführungsbeispiel erfolgt die Rotation dieser Förderwalzen über einen gemeinsamen Antrieb, der aus einem angetriebenen Endlosband 41 besteht, das über zwei Rollen 42, 43 läuft, von denen mindestens eine angetrieben wird. Das Band liegt mit seiner Unterseite gegen die Antriebszapfen 222 (Figur 14) der Förderwalzen an. Ein solcher Walzendrehantrieb kann auf einer oder beiden Seiten des Förderbandes vorgesehen sein.

In den Figuren 1 bis 3 sind die Förderwalzen der Einfachheit halber symbolisch als zylindrische Walzen dargestellt. Ihre tatsächliche Form geht aus den Figuren 10 bis 14 hervor und soll nunmehr erläutert werden:
Figur 10 zeigt einen Ausschnitt von vier benachbarten Walzen 22 des Förderbandes 20. In Längsrichtung bestehen die Förderwalzen aus rotationssymmetrischen Abschnitten 24 mit taillenförmigen Einschnürungen oder Ausnehmungen 241. Solche Walzenabschnitte werden im folgenden als "Taillienabschnitte" bezeichnet. Zwei in Förderrichtung benachbarte Taillienabschnitte zweier Walzen bilden eine trichterartige Öffnung 28 im Förderband, die zur Aufnahme eines der zu positionierenden Früchte dient. Diese trichterförmigen Öffnungen werden im folgenden als "Aufnahmetrichter" bezeichnet. Die Ausnehmungen 241 und damit die Aufnahmetrichter 28 sind in ihrer Maßen der Größe der zu positionierenden Früchte angepaßt.

In Figur 10 sind sämtliche Förderwalzen in Längsrichtung aus Taillienabschnitten 24 von der Länge 1 aufgebaut. Diese Ausführungsform ist diejenige mit der - bei gegebener Größe der Früchte - maximal möglichen Anzahl von Aufnahmetrichtern 28. Die Stellen, an denen eine Frucht positioniert werden kann, sind durch kleine volle Ellipsen p hervorgehoben.

Wenn bei unveränderter Größe der Früchte der Abstand der gebildeten Positionsreihen senkrecht zur Förderrichtung vergrößert werden soll, so läßt sich dies nicht einfach dadurch erreichen, daß die Taillienabschnitte in Längsrichtung der Förderwalze gestreckt werden. Eine solche Maßnahme hätte zur Folge, daß die Flanken der Einschnürung gegenüber der Längsachse der Förderwalze zu flach verlaufen würden, so daß die Zentrierwirkung des Aufnahmetrichters bei der Positionierung verloren gehen würde und folglich eine exakte Postitionierung nicht mehr stattfinden würde.

Um den genannten Abstand zwischen senkrecht zur Förderrichtung benachbarten Aufnahmetrichter zu vergrößern, können zwischen benachbarten Taillienabschnitten zylindrische Abschnitte eingefügt werden. Eine solche Bauform hat jedoch den Nachteil, daß beim Rotieren der Förderwalzen keine seitlich zu den Aufnahmetrichtern hin wirkende Kraft auf die Früchte ausgeübt wird, so daß eine zuverlässige Belegung aller Aufnahmetrichter nicht gewährleistet ist.

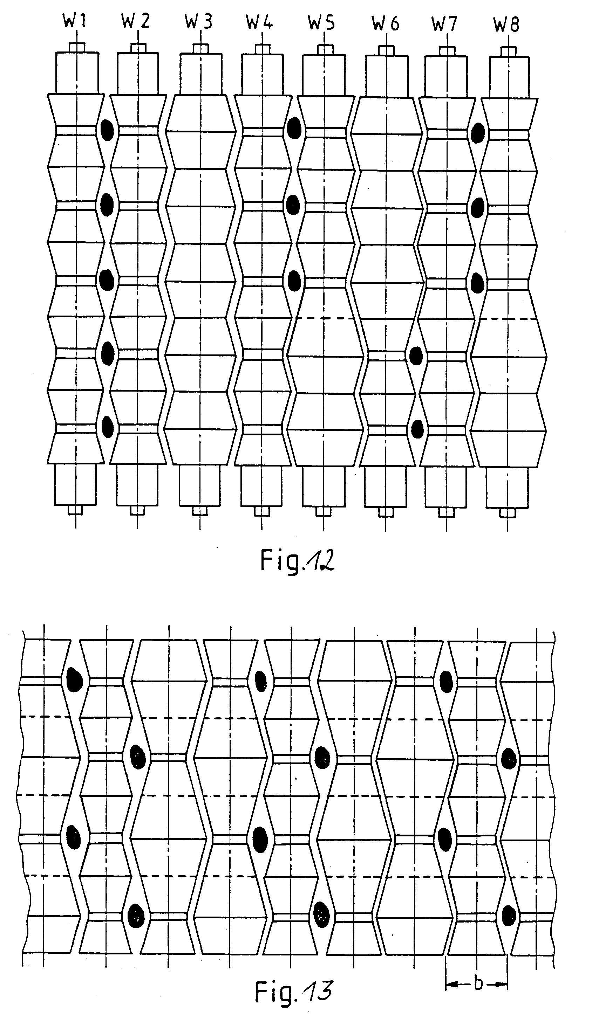

Um Letzteres zu erreichen, kann gemäß Figur 11 verfahren werden. Hier ist bei jeder zweiten Förderwalze w2 und w4 zwischen benachbarten Taillienabschnitten 24 ein Abschnitt 26 mit einer Ausbauchung vorgesehen, die den Einschnürungen (Ausnehmungen) 241 der in Förderrichtung benachbarten beiden Taillienabschnitte 24 derart angepaßt ist, daß hier nur ein schmaler Spalt 29 zwischen den in Längsrichtung benachbarten Walzenabschnitten vorhanden ist. Natürlich kann die axiale Länge 12 der keine Aufnahmetrichter bildenden Walzenabschnitte von der axialen Länge l1 der die Aufnahmetrichter bildenden Walzenabschnitte verschieden sein, solange eine hinreichend große Steigung der Flanken der ineinandergreifenden Bauch- und Taillienabschnitte vorhanden ist, um eine ausreichende seitliche Kraftkomponente auf die auf ihnen liegenden Gegenstände auszuüben.

Figur 12 zeigt, wie der Abstand zwischen den senkrecht zur Förderrichtung verlaufenden Reihen von Aufnahmetrichtern gegenüber Figur 10 und Figur 11 vergrößert werden kann. Zu diesem Zweck wird nach je zwei benachbarten Förderwalzen w1, w2 und w4, w5 eine Walze w3 beziehungsweise w6 eingefügt, die ausschließlich mit Bauchabschnitten 26 besetzt ist. Im oberen Teil von Figur 6 wird auf diese Weise der Abstand zwischen den senkrecht zur Förderrichtung verlaufenden Positionierungsreihen im Vergleich zum entsprechenden Abstand b in Figur 10 verdoppelt.

Im unteren Teil der Figur 12 ist eine Verdreifachung des Abstandes b in Figur 10 dargestellt, die dadurch erreicht wird, daß zwischen benachbarten Förderwalzenpaaren w1, w2 und w6, w7 drei Förderwalzen eingefügt sind, von denen die erste w3 und dritte w5 Bauchabschnitte haben und die mittlere w4 Taillienabschnitte hat.

Figur 13 zeigt eine Ausführungsform, bei der die in Förderrichtung verlaufenden Positionierungsreihen abwechselnd um das Maß b, welches gleich einer Förderwalzenteilung ist, gegeneinander versetzt sind. Diese Ausführungsform ergibt sich aus der im oberen Teil von Figur 12 gezeigten Ausführungsform, wenn die Einfügung von Bauchabschnitten senkrecht zur Förderrichtung abwechselnd um jeweils eine Walzenteilung b versetzt wird.

Eine sehr komplexe Walzenanordnung zeigt Figur 14. Hier sind die Abstände zwischen den Aufnahmetrichtern sowohl in Förderrichtung als auch senkrecht dazu gegenüber dem kleinstmöglichen Abstand gemäß Figur 10 vergrößert. Außerdem sind die in Förderrichtung verlaufenden Positionierungsreihen zusätzlich um ein Drittel des Abstandes in Förderrichtung (eine Walzenteilung) gegeneinander versetzt. Man erkennt, daß sich das wiederkehrende Muster der unterschiedlich aufgebauten Förderwalzen über sechs hintereinander angeordnete Förderwalzen erstreckt. Diese sechs Walzen, die in Figur 14 mit vollausgezogene Linien dargestellt sind, haben in Walzenlängsrichtung die folgenden wiederkehrenden Muster: Walze w1 = Taille-Bauch-Bauch-Bauch; Walze w2 = Bauch-Taille-Taille-Taille; Walze w3 = Taille-Bauch; Walze w4 = Taille-Taille-Bauch-Taille; Walze w5 = Bauch-Bauch-Taille-Bauch; Walze w6 nur Taillen. Die Walzen w4 und w5 sind also, abgesehen von einer Versetzung in axialer Richtung, genauso aufgebaut wie die Walzen w2 beziehungsweise w1.

An den Enden der Walzen sind in Figur 14 jeweils nur halbe Walzenabschnitte vorhanden, um eine in Richtung zur weiter innen liegenden Positionierungsreihe wirkende Seitenkraft zu erhalten.

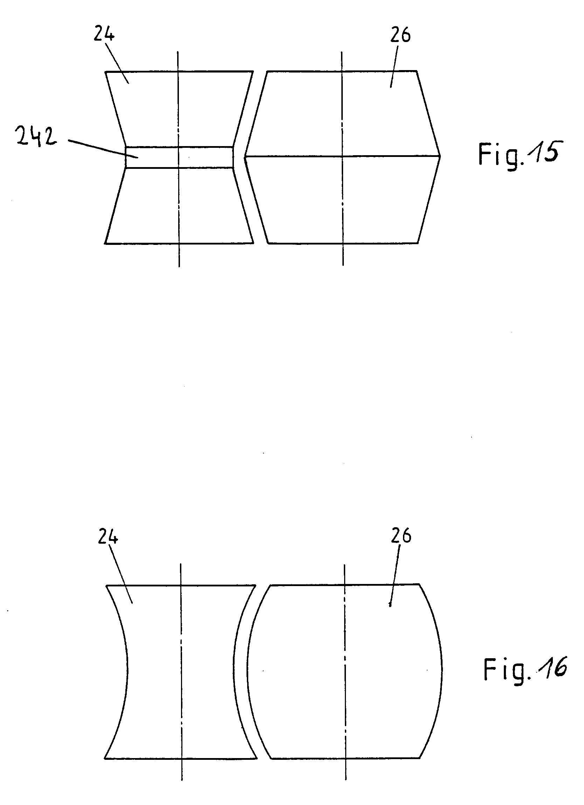

Man erkennt, daß abgesehen von den halben Walzenabschnitten an den Walzenenden, sämtliche Walzen in den Figuren 10 bis 14 aus nur zwei verschiedenen Typen von Walzenabschnitten, einem Bauchabschnittstyp 26 und einem Taillienabschnittstyp 24 gemäß Figur 15, aufgebaut sind. Der zylindrische Bund 242 des Taillienabschnittes kann weggelassen werden. Sein Vorteil besteht darin, daß die Festigkeit der Walze an dieser Stelle nicht zu stark geschwächt wird.

Statt die Flanken der Walzenabschnitte geradlinig auszubilden, können sie auch kurvenförmig, also nach außen konkav beziehungsweise konvex ausgebildet sein, wie dies Figur 16 zeigt.

Betrachtet man beispielsweise Figur 10, so wird deutlich, daß man statt von ausschließlich vorhandenen Taillienabschnitten auch von ausschließlich vorhandenen Bauchabschnitten sprechen könnte, wenn man die Definition eines Walzenabschnittes um eine halbe Walzenabschnittsteilung in Längsrichtung der Walze verschiebt. Die Begriffe "Taillienabschnitt" und "Bauchabschnitt" sind jedoch auf den Abstand b (Figur 14) zwischen benachbarten Walzen bezogen. In Bezug auf diesen Abstand hat ein Taillienabschnitt in der Mitte einen bedeutend kleineren Durchmesser und ein Bauchabschnitt einen bedeutend größeren Durchmesser.

Dort, wo keine Aufnahmetrichter zwischen in Förderrichtung benachbarten Taillien-und Bauchabschnitten gebildet werden, ist zwischen den Mantellinien der in Förderrichtung benachbarten Walzenabschnitte nur ein verhältnismäßig schmaler Spalt 29 (Figur 11) vorhanden, der so bemessen ist, daß eine Berührung der Walzen mit Sicherheit vermieden wird und eventuell die Gegenständen begleitende Schmutzteilchen durch das Band hindurchfallen können.

Die Fördervorrichtung gemäß der Erfindung arbeitet in folgender Weise: Wenn das Förderband 20 läuft, werden die im Einschüttschacht 36 zwischen den Förderwalzen liegenden Früchte mitgenommen und aus dem Einschüttschacht herausgefördert. Die Früchte, die nicht bereits in einem Aufnahmetrichter 28 liegen, werden durch die in Gegenförderrichtung wirkende Drehbewegung der Förderwalzen im Bereich des Antriebs 41 bis 43 sowie zusätzlich durch die infolge der Neigung des Förderbandes in Förderbandrichtung erzeugte Schwerkraftkomponente in Gegenförderrichtung bewegt. Dabei werden die Früchte infolge der schrägen Kanten der Walzen-Bauchabschnitte zu denjenigen Linien parallel zur Förderrichtung gelenkt, auf denen die Aufnahmetrichter 28 liegen.

Durch Anbringung einer Bürste 38 (Figur 1), die sich senkrecht zur Förderrichtung über das Förderband (20) erstreckt, kann die erstrebte Verteilung der Gegenstände auf die Aufnahmetrichter 28 zusätzlich gesichert werden. Die Anordnung der Bürste erfolgt in dem Verteilerbereich (41-43), vorzugsweise in der in Figur 1 rechten Hälfte dieses Bereiches. Die Bürstenhaare (Bürstenborsten) reichen herunter bis etwa zu den Förderwalzeen 22. Sie sind so weich, daß die Gegenstände durch die Bürstenhaare hindurchlaufen, wobei die Gegenstände, die noch nicht in einem Aufnahmetrichter liegen, einen Impuls erhalten, der ihre Wanderung in einen freien Aufnahmetrichter begünstigt. Die Verwendung solcher Bürsten hat einen ähnlichen Effekt wie die Schrägstellung des Förderbandes, so daß eine eventuell vorhandene Schrägstellung des Bandes verkleinert oder völlig aufgehoben werden kann. Natürlich können in Förderrichtung auch mehrere Bürsten 38 nebeneinander angeordnet werden.

## Patentansprüche

1. Anlage zum Entfernen von solchen Teilen (Abrißgut (1a)) einer kompaktförmigen Frucht, die an einer Stelle der Frucht konzentriert angewachsen sind und im Verhältnis zur Frucht so beschaffen sind, daß sich die Frucht in einem Luftstrom derart orientiert, daß das Abrißgut (1a), wie beispielsweise die Wurzelhaare einer Blumenzwiebel, stromabwärts weist
- bei welcher Anlage eine pneumatische Greifvorrichtung (6) vorhanden ist, durch welche die Frucht (1) in einem nach oben gerichteten Luftstrom, der aus einer unter der Frucht befindlichen Blasdüse (61) austritt und in eine über der Frucht befindliche Saugöffnung (62) eintritt, mit dem Abrißgut (1a) nach oben weisend gegen die Saugöffnung (62) gesaugt werden kann,
- bei welcher Anlage ferner eine Klemmvorrichtung (7) zum Festklemmen des Abrißgutes der Frucht vorhanden ist und
- bei welcher Anlage eine Abschervorrichtung (8) vorhanden ist, mittels derer die Frucht sich derart drehen läßt, daß das durch die Klemmvorrichtung (71) festgehaltene Abrißgut (1a) von der Frucht (1) abgeschert wird,
**dadurch gekennzeichnet**,
- daß eine Fördervorrichtung (2) vorhanden ist, die über mindestens eine Blasdüse (61) hinwegführt und die zum Führen der Früchte in mindestens einer Reihe in festgelegten Abständen über die zu der genannten Reihe gehörende Blasdüse (61) ausgebildet ist,
- daß mehrere der genannten Reihe von Früchten zugeordnete Saugöffnungen (62) vorhanden sind, die in vorzugsweise gleichen Winkelabständen am Umfang eines Saugöffnungsrades (63) mit im wesentlichen radialer Wirkungsrichtung angeordnet sind, welches Saugöffnungsrad (63) in einer vertikalen Ebene über der Blasdüse (61) und der Fördervorrichtung (2) drehbar angeordnet ist,
- daß an jeder Saugöffnung (62) eine Klemmvorrichtung (7) für das Abrißgut vorhanden ist,
- daß die Drehung des Saugöffnungsrades (63) derart mit dem Vorschub der Fördervorrichtung synchronisierbar ist, daß eine Saugöffnung (62) gerade dann mit der genannten Blasdüse (61) im wesentlichen fluchtet, wenn eine Frucht über dem Blasrohr angelangt ist,
- daß die Mündung der Saugöffnung (62) so bemessen ist, daß die Frucht gegen die Öffnung anliegen und das Abrißgut (1a) in die Öffnung hineinragen Kann, und
- daß die genannte Abschervorrichtung derart stationär an einer Stelle nahe dem Umfang des Saugöffnungsrades angeordnet ist, daß die von der Klemmvorrichtung (7) an der Saugöffnung (61) festgehaltene Frucht in diese Abschervorrichtung hineingeführt wird.

2. Anlage nach Anspruch 1, **dadurch gekennzeichnet**, daß das Saugöffnungsrad (63) aus einer Anzahl radial gerichteter Saugrohre (61) besteht, die pneumatisch und mechanisch an einen zentralen Saugkanal (64) angeschlossen sind, und daß die Klemmvorrichtungen (7) an den freien Enden der Saugrohre (61) angeordnet sind.

3. Anlage nach Anspruch 1 oder 2, **dadurch gekennzeichnet**, daß die Klemmvorrichtungen aus elastisch leicht verformbaren Rohrabschnitten bestehen, die unter der Wirkung zweier aufeinander zu bewegbarer Bügel flach zusammengedrückt werden können.

4. Anlage nach Anspruch 3, **dadurch gekennzeichnet**, daß die beiden drehbar gelagerten Bügel (71) mittels einer Federkraft (74) den elastischen Rohrabschnitt (62a) normalerweise zusammengedrückt halten und daß beim Drehen des Saugrohrrades (63) die Bügel an einer bestimmten Stelle durch eine mechanische Steuervorrichtung auseinander gedrückt werden.

5. Anlage nach einem der vorhergehenden Ansprüche,
**dadurch gekennzeichnet**,
- daß die Abschervorrichtung (8) aus zwei auf der gleichen Welle (85) angeordneten parallelen Scheiben besteht, die einen solchen Abstand voneinander haben, daß die an einer Saugöffnung (61) des Saugöffnungsrades (63) festgehaltene Frucht zwischen die beiden Scheiben gelangen und von diesen festgehalten werden kann und
- daß die beiden Scheiben eine solche relativ Drehbewegung gegeneinander auszuführen vermögen, daß die auf den Innenseiten der Scheiben abrollende Frucht der Drehbewegung des Saugrohres (62) weiter folgen kann, aber gleichzeitig derart zusätzlich gedreht wird, daß die Frucht von dem in der Klemmvorrichtung (7) eingeklemmten Abrißgut abgeschert wird.

6. Anlage nach Anspruch 5, **dadurch gekennzeichnet**, daß eine (81) der Scheiben (81,82) der Abschervorrichtung fest mit der Welle (85) verbunden ist und die andere Scheibe (82) frei auf der Welle drehbar ist.

7. Anlage nach Anspruch 6, **dadurch gekennzeichnet**, daß die frei drehbare Scheibe (82) entweder bei Betrieb festgehalten werden kann oder durch einen zusätzlichen Antrieb in entgegengesetzter Richtung wie die andere Scheibe (81) gedreht werden kann.

8. Anlage nach einem der Ansprüche 5 bis 7, **dadurch gekennzeichnet**, daß die einander zugewendeten Seiten des Scheibenpaares (81,82) mit weichen elastisch stark verformbaren Fingern versehen sind, wobei die Finger jeder Seite annähernd den halben Abstand zwischen den beiden Scheiben (81,82) überbrücken, sich gerade berühren oder einander geringfügig überlappen.

9. Anlage nach einem der Ansprüche 5 bis 8, **dadurch gekennzeichnet**, daß der gegenseitige Abstand (a) der beiden Scheiben so bemessen ist, daß die Frucht sowie ein Teil des Saugöffnungsrades (63) und der Klemmvorrichtung (7) in den Raum zwischen den beiden Scheiben eintauchen können.

10. Anlage nach einem der Ansprüche 5, 8 oder 9, **dadurch gekennzeichnet**, daß anstelle der Scheiben zwei parallele endlose Bänder vorhanden sind.

11. Anlage nach einem der vorhergehenden Ansprüche,
**dadurch gekennzeichnet**, daß bei Verwendung einer Fördervorrichtung, auf der mehrere mit Früchten besetzte parallele Reihen der pneumatischen Abschervorrichtung zugeführt werden, in entsprechenden Positionen senkrecht zur Förderrichtung eine entsprechende Anzahl von n Blasdüsen (61), n Saugöffnungsrädern (63) und n Abschervorrichtungen (8) angeordnet sind, wobei jedes Paar von Blasdüse und Saugöffnungsrad in einer Vertikalebene liegt, in der auch eine zugeordnete Reihe von ankommenden Früchten liegt.

12. Anlage nach Anspruch 11, **dadurch gekennzeichnet**, daß alle n Blasdüsen (61) an ein gemeinsames Druckluftversorgungsrohr (66) angeschlossen sind und alle Saugöffnungsräder (63) mechanisch und pneumatisch an denselben Saugkanal (64) angeschlossen sind.

13. Anlage nach einem der Ansprüche 11 oder 12, **dadurch gekennzeichnet**, daß in axialer Richtung des Saugkanals (64) zwei benachbarte Saugöffnungsräder (63,63a) nur um einen relativ kleinen Winkel (Alpha) von beispielsweise 30 Grad gegeneinander versetzt sind, wobei die insgesamt n/2 gebildeten Paare von Saugöffnungsräder (63,63a) gegeneinander um einen Winkel von 720/n Grad gegeneinander versetzt sind, und daß jede zweite Reihe von zugeführten Früchten auf der Fördervorrichtung (2) im Verhältnis zu den anderen Reihen in Förderrichtung um eine dem kleinen Winkel (Alpha) entsprechende Strecke versetzt sind (Figur 6, 7 und 14).

14. Anlage nach einem der vorhergehenden Ansprüche,
**dadurch gekennzeichnet**, daß die Fördervorrichtung (2) mit einem Förderband (20) ausgerüstet ist, welches aus in Förderrichtung nebeneinander angeordneten und miteinder verbundene drehbaren Förderwalzen (22) besteht, und daß benachbarte Förderwalzen (22) an gleichen Stellen in Walzenlängsrichtung mit taillienförmigen Einschnürungen (241) versehen sind, durch die sogenannte "Taillienabschnitte" (24) gebildet werden, die so bemessen sind, daß sie im Förderband den zu fördernden Früchten angepaßte trichterartige Öffnungen (28) ("Aufnahmetrichter") bilden.

15. Anlage nach Anspruch 14, **dadurch gekennzeichnet**, daß in einem Verteilerbereich des Förderbandes die Förderwalzen mit einem Antrieb (41 bis 43) versehen sind, der die Förderwalzen (20) in derjenigen Richtung zu drehen vermag, bei der eine Förderkraft in Gegenförderrichtung auf die Früchte (1) ausgeübt wird.

16. Anlage nach einem der Ansprüche 14 und 15,
**dadurch gekennzeichnet**, daß das Förderband (20) in Förderrichtung eine feste oder einstellbare Steigung aufweist, durch die eine Schwerkraftkomponente in Gegenförderrichtung auf die sich auf dem Förderband befindenden Früchte ausgeübt wird.

17. Anlage nach einem der Ansprüche 14 bis 16,
**dadurch gekennzeichnet**, daß die Steigung etwa 10 bis 30 Grad, vorzugsweise 15 bis 20 Grad, beträgt.

18. Anlage nach einem der Ansprüche 14 bis 17,
**dadurch gekennzeichnet**, daß mit Ausnahme der Stellen, an denen Aufnahmetrichter (28) gebildet werden, nur ein kleiner Abstand (29) zwischen den benachbarten Mantellinien benachbarter Förderwalzen vorhanden ist.

19. Anlage nach einem der Ansprüche 14 bis 18,
**dadurch gekennzeichnet**, daß sämtliche Förderwalzen (22) aus in Walzenlängsrichtung lückenlos aufeinanderfolgenden Taillienabschnitten (24) aufgebaut sind (Figur 10).

20. Anlage nach einem der Ansprüche 14 bis 19,
**dadurch gekennzeichnet**, daß zur Vergrößerung des senkrecht zur Förderrichtung vorhandenen Abstandes zwischen benachbarten Aufnahmetrichtern (28) zwischen in Walzenlängsrichtung benachbarten Taillienabschnitten (24) der Förderwalzen zylindrischen Walzenabschnitte vorhanden sind.

21. Anlage nach einem der Ansprüche 14 bis 20,
**dadurch gekennzeichnet**, daß zur Vergrößerung des senkrecht zur Förderrichtung vorhandenen Abstandes zwischen benachbarten Aufnahmetrichtern (28) bei jeder zweiten Förderwalze zwischen in Walzenlängsrichtung benachbarten Taillienabschnitten (24) ein mit einer Ausbauchung versehener Abschnitt (26) ("Bauchabschnitt") vorhanden ist, wobei die Ausbauchung dieses Abschnittes den Taillienabschnitten (24) der beiden in Förderrichtung benachbarten Walzenabschnitte angepaßt ist (Figur 11).

22. Anlage nach einem der Ansprüche 14 bis 21,
**dadurch gekennzeichnet**, daß zur Vergrößerung des in Förderrichtung vorhandenen Abstandes zwischen benachbarten Aufnahmetrichtern (28) zwischen je zwei benachbarten Förderwalzen (w1,w2; w4,w5), die mittels Taillienabschnitte (24) zusammen Aufnahmetrichter (28) bilden, mindenstens eine Förderwalze (w3) liegt, die mit Bauchabschnitten (26) in die Taillienabschnitte (24) ihrer beiden benachbarten Förderwalzen (w2,w4) hineinragt (Figur 12).

23. Anlage nach Anspruch 22, **dadurch gekennzeichnet**, daß die Einfügung eines Bauchabschnitts (26) zwischen je zwei in Förderrichtung benachbarten Taillienabschnitten für die mehreren in Förderrichtung vorhandenen Reihen von Walzenabschnitten in Förderrichtung versetzt erfolgt (Figur 13).

24. Anlage nach einem der Ansprüche 14 bis 23,
**dadurch gekennzeichnet**, daß an den beiden Enden der Förderwalzen zum seitlichen Abschluß der durch das Förderband gebildeten Positionierungsebene zylindrische Abschnitte oder axiale Hälften (24a, 26a) (Figur 8) von Taillienabschnitten beziehungsweise Bauchabschnitten derart angeordnet sind, daß sie auf die sich auf ihnen befindenden Früchte eine zur Bandmitte hin gerichtete Kraft verursachen (Figur 14).

25. Anlage nach einem der Ansprüche 14 bis 24,
**dadurch gekennzeichnet**, daß die schräg zur Längsachse der Förderwalzen (22) verlaufenden Flanken der Walzenabschnitt (24,26) geradlinig verlaufen.

26. Anlage nach einem der Ansprüche 14 bis 24,
**dadurch gekennzeichnet**, daß die schräg zur Längsachse der Förderwalzen (22) verlaufenden Flanken der Walzenabschnitt (24,26) kurvenförmig verlaufen.

27. Anlage nach einem der Ansprüche 14 bis 26,
**dadurch gekennzeichnet**, daß die Förderwalzen aus zylindrischen tragenden Stangen aufgebaut sind, auf die mit einem entsprechenden axialen Loch versehene Taillienabschnitte und Bauchabschnitte aufschiebbar sind, die auf den Stangen drehsicher, zum Beispiel durch Preßsitz, durch Kleben oder durch axiale Verspannung, befestigt werden.

28. Anlage nach einem der Ansprüche 14 bis 27,
**dadurch gekennzeichnet**, daß am Anfang der Förderstrecke des Förderbandes (20) ein Einschüttschacht (36) für die Früchte angeordnet ist.

29. Anlage nach Anspruch 28, **dadurch gekennzeichnet**, daß am Boden des Einschüttschachtes (36) in Förderrichtung orientierte Leitbleche (362) vorhanden sind, welche die Früchte in die Lage der Positionierungsreihen auf dem Förderband lenken.

30. Anlage nach einem der Ansprüche 14 bis 29,
**dadurch gekennzeichnet**, daß die Förderwalzen über an endlosen Ketten (31) angebrachte Lagerbleche (35) miteinander verbunden sind.

31. Anlage nach einem der Ansprüche 14 bis 30,
**dadurch gekennzeichnet**, daß der Antrieb zur Drehung der Förderwalzen im Verteilerbereich durch ein umlaufendes Band (41) erfolgt, welches gegen Antriebsstutzen (222) an den Enden der Förderwalzen (22) anliegt.

32. Anlage nach einem der Ansprüche 14 bis 31, **dadurch gekennzeichnet**, daß im Verteilerbereich (41-43) über dem Förderband (20) quer zur Förderrichtung mindestens eine Bürste (38) angeordnet ist, deren Haare (Borsten) etwa bis in den peripheren Bereich der Förderwalzen (22) reichen.

## Claims

1. Machine to remove such parts (rip-off-parts 1a) of a compact fruit which parts are grown on to the fruit in a concentrated manner at one location of the fruit and which have relative to the fruit the property that the fruit, in a stream of air, will orient itself such that the rip-off-parts (1a), such as the root hairs of a flower bulb, will extend in the downstream direction,
- which machine comprises a pneumatic gripping device (6) which is adapted to suck the fruit (1) by means of an air stream, which emanates from a blast nozzle (61) arranged below the fruit and enters into an aspiration port (62) arranged above the fruit, against said aspiration port (62),
- which machine further comprises a clamping device (7) for clamping the rip-off-parts of the fruit and
- which machine comprises a shear-off device (8) which is adapted to rotate the fruit such that the rip-off-parts clamped in the clamping device (71) are sheared off from the fruit (1),
**characterized** in that
- the machine comprises a conveyor device (2) which passes over at least one blast nozzle (61) and which is adapted to transport the fruits aligned in at least one row and spaced apart from each other in predetermined distances over the blast nozzle assigned to the row in question,
- that there are a plurality of blast nozzles (62) assigned to said row of fruits which blast nozzles are arranged in preferably equal angular displacement and with their direction of action oriented substantially radially, along the circumference of an aspiration port wheel (63), said aspiration port wheel (63) being radially arranged in a vertical plane above said blast nozzle (61) and said clamping device (2),
- that each aspiration port (62) is provided with a clamping device (7) for rip-off-parts,
- that the rotation of the aspiration port wheel (63) is synchronised to the forward feed of the clamping device in such a way that the aspiration port (62) becomes essentially flush with said blast nozzle (61) in precisely that instant when a fruit has arrived above the blast pipe,
- that the mouth of the aspiration port (62) is dimensioned such that the fruit abuts against the aspiration port and the rip-off-parts (1a) may protrude into said port and
- that said shear-off device is disposed stationary at such a location near the circumference of the aspiration port wheel that the fruit held by said clamping device (7) at the aspiration port (61) is guided into said shear-off device.

2. Machine according to claim 1, **characterized** in that said aspiration port wheel (63) consists of a plurality of radially extending aspiration pipes (61) connected pneumatically and mechanically to a central suction channel (64) and that clamping devices (7) are arranged at the free ends of said aspiration pipes (61).

3. Machine according to claim 1 or 2, **characterized** in that said clamping devices consist of elastic easily deformable pipe segments which are able to be squeezed flat under the action of two bows adapted to be moved towards each other.

4. Machine according to claim 3, **characterized** in that said two rotatably journaled bows (71), by means of a spring force (74), hold normally the elastic pipe segments (62a) squeezed together, and that, when the aspiration pipe wheel (63) is under rotation, the bows are pressed apart from each other at a certain position by means of a mechanical control device.

5. Machine according to any of the preceding claims, **characterized** in
- that said shear-off device (8) consists of two parallel disks arranged on the same shaft (85) in such a distance from each other that a fruit held at the aspiration port (61) of said aspiration port wheel (63) may arrive between said two discs and rigidly held by these discs and
- that the two discs are adapted to move relative to each other in such a way that the fruit is able to follow the rotating movement of said aspiration pipe (62) by rolling on the inner surfaces of the disks, and that at the same time the fruit performs an additional rotating movement such that the fruit is sheared off from the rip-off-parts clamped in said clamping device (7).

6. Machine according to claim 5, **characterized** in that one (81) of the discs (81, 82) of the shear-off device is rigidly connected to the shaft (85) and the other disks (82) is able to freely idle on the shaft.

7. Machine according to claim 6, **characterized** in that said freely idling disc (82) may, under operation, either be held stationary or be rotated in the opposite direction of the other disc (81) by means of an additional drive.

8. Machine according to any of claims 5 - 7, **characterized** in that those sides of the discs (81, 82) which face each other are provided with soft elastic and easily deformable fingers, with the fingers of each side bridging almost half the distance between the two discs (81, 82), or just contact each other, or overlap each other slightly.

9. Machine according to any of claims 5 - 8, **characterized** in that the distance (a) between the two discs is such that the fruit and part of the aspiration port wheel (63) and the clamping device (7) may protrude into the space between the two disks.

10. Machine, according to any of claims 5, 8 or 9, **characterized** in that said discs are replaced by two parallel endless belts.

11. Machine, according to any of the preceding claims, **characterized** in that, when using a conveyor device with a plurality of parallel rows occupied by fruits supplied to the pneumatic shear-off device, the machine is provided in corresponding positions perpendicular to the conveying direction with a corresponding number of n blast nozzles (61), n aspiration port wheels (63) and n shear-off devices (8), with each pair of a blast nozzle and a aspiration port wheel being arranged in a vertical plane in which is also positioned an associated row of incoming fruits.

12. Machine according to claim 11, **characterized** in that all n blast nozzles (61) are connected to a common supply pipe (66) for pressurized air and all aspiration port wheels (63) are mechanical and pneumatically connected to the same suction channel (64).

13. Machine according to any of claims 11 or 12, **characterized** in that in the axial direction of the suction channel (64) two adjacent aspiration port wheels (63, 63a) are displaced relative to each other by a relatively small angle (alpha) of for example 30°, whereby the total number of pairs if aspiration port wheels (63, 63a) are displaced against each other by an angle of 720/n degree, and that each second row of supplied fruits is displaced on the conveyor device (2) in relation to the other rows in conveying direction by a distance that corresponds to said small angle (alpha) (Figure 6, 7 and 14).

14. Machine, according to any of the preceding claims, **characterized** in that the conveyor device (2) is equipped with the conveyor belt (20) which consists of a plurality of rotatable transport rolls (22) arranged adjacent to one another and connected to one another, and that adjacent transport rolls (22) at the same positions in the longitudinal direction of the rolls are provided with waist-shaped reductions in area (241) to form so-called "waist portions" (24) which are dimensioned such as to create funnel-shaped openings (28) (receiving funnels) in the conveyor belt which are adjusted to the fruits to be supplied.

15. Machine according to claim 14, **characterized** in that in one distributing portion of the conveyor belt the transport rolls are provided with a drive (41 - 43) adapted to rotate the transport rolls (20) in that direction which causes the conveying force to act on the fruits (1) opposite to the transport direction.

16. Machine according to any of claims 14 and 15, **characterized** in that the conveyor belt (20) is provided with a fixed or adjustable ascending slope in transport direction such that a component of gravitational force is exerted in opposite of the transport direction on the fruits on the conveyor belt.

17. Machine according to any of claims 14 - 16, **characterized** in that the ascending slope amounts to about 10 to 30 degrees, preferably 15 to 20 degrees.

18. Machine according to any of claims 14 - 17, **characterized** in that, except for the locations where receiving funnels (28) are formed, there is only a small distance (29) between the envelopes of adjacent transport rolls.

19. Machine according to any of claims 14 - 15, **characterized** in that all transport rolls (22) are provided with adjacent waist portion (24) in the longitudinal direction of the rolls without cylindrical section between these adjacent waist portions (Figure 10).

20. Machine according to any of claims 14 - 19, **characterized** in that for enlarging the distance perpendicular to the transport direction between adjacent receiving funnels (28) cylindrical roll sections are provided between adjacent waist portions (24) in the longitudinal direction of the rolls.

21. Machine according to any of claims 14 - 20, **characterized** in that for enlarging the distance perpendicular to the transport direction between adjacent receiving funnels (28) each second transport roll is provided in the longitudinal direction of the roll with a convex portion (26) ("belly portion") between adjacent waist portions (24), whereby the belly portions are adjusted to the waist portions (24) of the two adjacent roll sections seen in the conveying direction (Figure 11).

22. Machine according to any of claims 14 - 21, **characterized** in that for enlarging the distance between adjacent receiving funnels (28) in transport direction, between each pair of adjacent transport rolls (w1, w2; w4, w5) the central waist portions (24) of which form receiving funnels (28), is positioned at least one transport roll (w3) which protrudes with belly portions (26) into the waist portions (24) of its two adjacent transport rolls (w2, w4) (Figure 12).

23. Machine according to claim 22, **characterized** in that the insertion of a belly portion (26) between the two adjacent waist portions in transport direction is displaced in transport direction for the several existing rows of roll portions (Figure 13).

24. Machine according to any of claims 14 - 23, **characterized** in that the two ends of the transport rolls are provided with cylindrical portions or axial halves (24a, 26a) (Figure 8) of waist portions and belly portions, respectively such that they exert on the fruits lying on them a force directed towards the centre of the conveyor belt in order to form lateral conclusions of the positioning plane formed by the conveyor belt (Figure 14).

25. Machine according to claim 14 - 24, **characterized** in that the flanks of the roll portions (24, 26) which are sloped relative to the longitudinal direction of the transport rolls (22) are straight.

26. Machine according to any of claims 14 - 24, **characterized** in that the flanks of the roll portions (24, 26) which are sloped relative to the longitudinal direction of the transport rolls (22) are curved.

27. Machine according to any of claims 14 - 26, **characterized** in that the transport rolls are composed of cylindrical support rods on which are slipped waist and belly portions, which are provided with corresponding axial holes and which are prevented from idling on said rods by, for example, press fit, adhesion, or axial bracing.

28. Machine according to any of claims 14 - 27, **characterized** in that at the beginning of the conveyor track of the conveyor belt (20) there is an input box (36) for the fruits.

29. Machine according to claim 28, **characterized** in that the bottom of the input box (36) is provided with guide sheets (362), which are oriented in transport direction and are adapted to guide the fruits to the positioning rolls on the conveyor belt.

30. Machine according to any of claims 14 - 29, **characterized** in that the transport rolls are connected to one another by bearing plates (35) which are arranged on endless chains (31).

31. Machine according to any of claims 14 - 30, **characterized** in that the drive for rotating the transport rolls in the distribution area consists of an endless belt (41) which abuts against drive studs (222) at the ends of the transport rolls (22).

32. Machine according to any of claims 14 - 31, **characterized** in that at least one brush (38) is arranged in the distribution area (41 - 43) above the conveyor belt (20) and perpendicular to the transport direction, with the bristles of the brush extending approximately to the peripheral area of the transport rolls (22).

## Revendications

1. Installation pour enlever des parties (produit à arracher 1a) d'un fruit sous forme compacte, qui sont concentrées en un point du fruit et sont dans un rapport tel par rapport au fruit que le fruit s'oriente dans un courant d'air, de sorte que le produit à arracher (1a), comme par exemple les poils de racine d'un bulbe à fleur, soit tourné vers l'aval
- installation dans laquelle est présent un dispositif (6) pneumatique de préhension, par lequel le fruit (1) peut être aspiré dans un courant d'air dirigé vers le haut, qui sort d'une buse (61) d'insufflation se trouvant sous le fruit et qui entre dans un orifice (62) d'aspiration se trouvant au-dessus du fruit, en ayant le produit à arracher (1a) tourné vers le haut vers l'orifice d'aspiration (62).
- installation dans laquelle il est prévu en outre un dispositif (7) de serrage destiné à serrer le produit à arracher du fruit, et
- installation dans laquelle il est prévu un dispositif (8) de cisaillement au moyen duquel le fruit peut être mis en rotation, de manière que le produit à arracher (1a) maintenu solidement par le dispositif (7) de serrage soit séparé du fruit (1) par cisaillement,
caractérisée
- en ce qu'il est prévu un dispositif (2) convoyeur qui mène au-delà d'au moins une buse (61) d'insufflation et qui est constitué pour guider les fruits en au moins une rangée à des intervalles déterminés au-dessus de la buse (61) d'insufflation appartenant à ladite rangée,
- en ce qu'il est prévu plusieurs orifices (62) d'aspiration qui sont associés à ladite rangée de fruits, qui sont disposés de manière équidistante angulairement sur le pourtour d'une roue (63) d'orifices d'aspiration avec une direction d'action sensiblement radiale, cette roue (63) d'orifices d'aspiration étant montée tournante dans un plan vertical au-dessus de la buse (61) d'insufflation et du dispositif (2) de convoyage,
- en ce qu'il est prévu sur chaque orifice (62) d'aspiration, un dispositif (7) de serrage du produit à arracher,
- en ce que la rotation de la roue (63) d'orifices d'aspiration peut être synchronisée avec l'avance du dispositif convoyeur, de manière qu'un orifice (62) d'aspiration soit sensiblement aligné avec ladite buse (61) d'insufflation, précisément lorsqu'un fruit arrive au-dessus du tube d'insufflation,
- en ce que l'embouchure de l'orifice (62) d'aspiration a des dimensions telles que le fruit peut s'appliquer sur l'orifice et que le produit à arracher (1a) peut pénétrer dans l'orifice,
- en ce que ledit dispositif de cisaillement est monté fixe en un point proche de la périphérie de la roue d'orifices d'aspiration, de façon que le fruit maintenu par le dispositif (7) de serrage sur l'orifice (61) d'aspiration puisse passer dans ce dispositif de cisaillement.

2. Installation suivant la revendication 1, caractérisée en ce que la roue (63) d'orifices d'aspiration est constituée d'un certain nombre de tubes (61) d'aspiration dirigés radialement, qui sont raccordés pneumatiquement et mécaniquement à un canal (64) central d'aspiration et en ce que les dispositifs (7) de serrage sont disposés aux extrémités libres des tubes (61) d'aspiration.

3. Installation suivant la revendication 1 ou 2, caractérisée en ce que les dispositifs de serrage sont constitués de tronçons de tube pouvant être déformés facilement d'une manière élastique et qui peuvent être aplatis sous l'action de deux étriers susceptibles de se mouvoir l'un sur l'autre.

4. Installation suivant la revendication 3, caractérisée en ce que les deux étriers (71) montés tournants maintiennent normalement comprimés, par une force (74) élastique, le tronçon (62a) de tube élastique et en ce que, lors de la rotation de la roue (63) de tubes d'aspiration, les étriers sont écartés l'un de l'autre en un point déteminé par un dispositif mécanique de commande.

5. Installation suivant l'une des revendications précédentes, caractérisée
- en ce que le dispositif (8) de cisaillement est constitué de deux disques parallèles montés sur le même arbre (85) et à une distance telle l'un de l'autre que le fruit, maintenu sur un orifice (61) d'aspiration de la roue (63) d'orifices d'aspiration, peut arriver entre les deux disques et être maintenu par ceux-ci, et
- en ce que les deux disques peuvent effectuer l'un par rapport à l'autre un mouvement relatif de rotation tel que le fruit roulant du côté intérieur des disques peut continuer à suivre le mouvement de rotation du tube (62) d'aspiration, mais en même temps être mis supplémentairement en rotation en sorte que le fruit est séparé du produit à arracher serré dans le dispositif (7) de serrage.

6. Installation suivant la revendication 5, caractérisée en ce que l'un (81) des deux disques (81, 82) du dispositif de cisaillement est solidaire de l'arbre (85) et l'autre disque (82) est monté fou sur l'arbre.

7. Installation suivant la revendication 6, caractérisée en ce que que le disque (82) monté fou peut être maintenu fixe en fonctionnement ou peut être entraîné en rotation par un dispositif d'entraînement supplémentaire en sens inverse de l'autre disque (81).

8. Installation suivant l'une des revendications 5 à 7, caractérisée en ce que les côtés du couple (81, 82) de disques qui sont tournés l'un vers l'autre sont munis de doigts mous très déformables élastiquement, les doigts de chaque côté recouvrant à peu près la moitié de la distance entre les deux disques (81, 82) se touchant presque ou se chevauchant légèrement.

9. Installation suivant l'une des revendications 5 à 8, caractérisée en ce que la distance (a) mutuelle entre les deux disques est telle que le fruit ainsi qu'une partie de la roue (63) d'orifices d'aspiration et du dispositif (7) de serrage peuvent pénétrer dans l'espace compris entre les deux disques.

10. Installation suivant l'une des revendications 5, 8 ou 9, caractérisée en ce qu'au lieu des disques il est prévu deux bandes sans fin parallèles.

11. Installation suivant l'une quelconque des revendications précédentes, caractérisée en ce que, lors de l'utilisation d'un dispositif convoyeur sur lequel plusieurs rangées parallèles garnies de fruits peuvent être amenées au dispositif pneumatique de cisaillement, il est prévu dans des positions adéquates perpendiculairement à la direction de transport un nombre adéquat de n buses (61) d'insufflation de n roues (63) d'orifices d'aspiration et de n dispositifs (8) de cisaillement, chaque couple de buses d'insufflation et de roues d'orifices d'aspiration étant dans un plan vertical dans lequel se trouve également une rangée associée de fruits qui arrivent.

12. Installation suivant la revendication 11, caractérisée en ce que toutes les n buses (61) d'insufflation sont raccordées à un tuyau (66) commun d'alimentation en air comprimé et toutes les roues (63) d'orifices d'aspiration sont raccordées mécaniquement et pneumatiquement au même canal (64) d'aspiration.

13. Installation suivant l'une des revendications 11 ou 12, caractérisée en ce que, dans la direction axiale du canal (64) d'aspiration, deux roues (63, 63a) d'orifices d'aspiration voisine ne sont montées décalées l'une par rapport à l'autre que d'un angle (α) relativement petit de par exemple 30°, les n/2 couples formés dans l'ensemble de roues (63, 63a) d'orifices d'aspiration étant décalés les uns par rapport aux autres d'un angle de 720/n° et une rangée sur deux de fruits amenés est décalé sur le dispositif de convoyeur par rapport aux autres rangées dans le sens de convoyage sur une étendue correspondant à l'angle (α) petit (figures 6, 7 et 14).

14. Installation suivant l'une des revendications précédentes, caractérisée en ce que le dispositif (2) de convoyage est muni d'une bande (20) convoyeuse qui est constituée de rouleaux (22) convoyeurs tournants disposés côte à côte dans la direction de convoyage et reliés les uns aux autres, et en ce que des rouleaux (22) convoyeurs voisins sont munis au même point dans la direction longitudinale des rouleaux de rétrécissements (241) par lesquels sont formés ce que l'on appelle des "tronçons rétrécis" (24) de dimension telle qu'ils forment dans la bande convoyeuse des orifices (28) ("trémies de réception") en forme de trémie adaptés aux fruits à transporter.

15. Installation suivant la revendication 14, caractérisée en ce que dans une région formant répartiteur de la bande convoyeuse, les rouleaux transporteurs sont munis d'un dispositif d'entraînement (41, 43) qui permet de faire tourner les rouleaux (20) convoyeurs dans la direction dans laquelle une force de convoyage s'applique sur les fruits (1) dans le sens inverse à celui de convoyage.

16. Installation suivant l'une des revendications 14 ou 15, caractérisée en ce que la bande (20) convoyeuse présente dans le sens de convoyage une pente fixe ou réglable par laquelle une composante de gravité dans le sens inverse de celui de convoyage est appliquée aux fruits se trouvant sur la bande convoyeuse.

17. Installation suivant l'une des revendications 14 à 16, caractérisée en ce que la pente est de 10 à 30° environ et de préférence de 15 à 20°.

18. Installation suivant l'une des revendications 14 à 17, caractérisée en ce qu'à l'exception des points sur lesquels sont formés des trémies (28) de réception, il n'est prévu qu'une petite distance (29) entre les génératrices voisines de rouleaux convoyeurs voisins.

19. Installation suivant l'une des revendications 14 à 18, caractérisé en ce que tous les rouleaux (22) convoyeurs sont constitués de tronçons (24) rétrécis se succédant sans interruption dans la direction longitudinale des rouleaux.

20. Installation suivant l'une des revendications 14 à 19, caractérisée en ce que pour augmenter la distance prévue perpendiculairement au sens de convoyage entre des trémies (28) de réception voisines, il est prévu, entre des tronçons (24) rétrécis voisins dans la direction longitudinale des rouleaux de convoyage, des tronçons de rouleaux cylindriques.

21. Installation suivant l'une des revendications 14 à 20, caractérisée en ce que pour augementer la distance prévue perpendiculairement à la direction de convoyage entre deux trémies (28) de réception voisines, il est prévu pour un rouleau convoyeur sur deux, entre des tronçons (24) rétrécis voisins dans la direction longitudinale des rouleaux, un tronçon (26) ("tronçon bombé") muni d'une partie bombée, la partie bombée de ce tronçon étant adaptée aux parties (24) rétrécies des deux tronçons de rouleaux voisines dans la direction de convoyage (figure 11).

22. Installation suivant l'une des revendications 14 à 21, caractérisée en ce que pour augmenter la distance prévue dans la direction de convoyage entre deux trémies (28) de réception voisines, il est prévu entre deux rouleaux (W1, W2, W4, W5) convoyeurs voisins qui forment ensemble aux moyens de tronçons (24) rétrécis des trémies (28) de réception, au moins un rouleau (W3) convoyeur qui pénètre par des tronçons (26) bombés dans les tronçons (24) rétrécis de leurs deux rouleaux (W2, W4) convoyeurs voisins (figure 12).

23. Installation suivant la revendication 22, caractérisée en ce que l'insertion d'un tronçon (26) bombé entre deux tronçons rétrécis voisins dans la direction de convoyage s'effectue de manière décalée dans la direction de convoyage pour les plusieurs rangées de tronçons de rouleaux prévus dans la direction de convoyage (figure 13).

24. Installation suivant l'une des revendications 14 à 23, caractérisée en ce qu'aux deux extrémités des rouleaux convoyeurs il est prévu, pour fermer latéralement les parties cylindriques planes de positionnement formées par la bande convoyeuse ou les moitiés (24a, 26a) axiales (figure 8), des tronçons rétrécis ou des tronçons bombés de sorte qu'ils provoquent sur les fruits se trouvant sur eux une force dirigée vers le milieu de la bande (figure 14).

25. Installation suivant l'une des revendications 14 à 24, caractérisé en ce que les flancs du tronçon (24, 26) de rouleaux, s'étendant en oblique par rapport à l'axe longitudinal des rouleaux (22) convoyeurs, sont rectilignes.

26. Installation suivant l'une des revendications 14 à 24, caractérisée en ce que les flancs du tronçon (24, 26) de rouleau, s'étendant en oblique par rapport à l'axe longitudinal des rouleaux (22) convoyeurs, sont incurvés.

27. Installation suivant l'une des revendications 14 à 26, caractérisée en ce que les rouleaux convoyeurs sont constitués de barres porteuses cylindriques sur lesquelles sont montés coulissants des tronçons rétrécis et des tronçons bombés munis d'un trou axial adéquat qui sont fixés sur les barres sans possibilité de tourner par exemple par ajustage serré, par collage ou par blocage axial.

28. Installation suivant l'une des revendications 14 à 27, caractérisée en ce qu'au début de la zone de convoyage de la bande (20) convoyeuse est prévu un puits (36) d'introduction en vrac des fruits.

29. Installation suivant la revendication 28, caractérisée en ce qu'au fond du puits (36) d'introduction en vrac des fruits est prévu des chicanes (362) orientées dans la direction de convoyage et déviant les fruits dans la position des rangées de positionnement sur la bande convoyeuse.

30. Installation suivant l'une des revendications 14 à 29, caractérisée en ce que les rouleaux convoyeurs sont reliés entre eux par des tôles (35) formant palier montées sur des chaînes (31) sans fin.

31. Installation suivant l'une des revendications 14 à 30, caractérisée en ce que l'entraînement pour la rotation des rouleaux convoyeurs s'effectue dans la zone du répartiteur par une bande (41) continue qui s'applique sur des embouts (222) d'entraînement aux extrémités des rouleaux (22) convoyeurs.

32. Installation suivant l'une des revendications 14 à 31, caractérisée en ce que dans la zone (41 à 43) du répartiteur, il est prévu au-dessus de la bande (20) convoyeuse transversalement à la direction de convoyage au moins une brosse (38) dont les choix s'étendent d'à peu près jusque dans la partie périphérique des rouleaux (22) convoyeurs.
